Europäisches Patentamt

European Patent Office

Office européen des brevets

(11) Publication number: **0 372 124 B1**

(12) EUROPEAN PATENT SPECIFICATION

(45) Date of publication of patent specification: **17.06.92** (51) Int. Cl.⁵: **C01B 33/145**

(21) Application number: **88310175.0**

(22) Date of filing: **28.10.88**

(54) **A method for the preparation of a silica sol dispersed in an organic solvent.**

(43) Date of publication of application:
**13.06.90 Bulletin 90/24**

(45) Publication of the grant of the patent:
**17.06.92 Bulletin 92/25**

(84) Designated Contracting States:
**DE FR GB**

(56) References cited:
**GB-A- 1 134 118**
**US-A- 2 801 185**

(73) Proprietor: **SHIN-ETSU CHEMICAL CO., LTD.**
**6-1, Ohtemachi 2-chome**
**Chiyoda-ku Tokyo(JP)**

(72) Inventor: **Ogihara, Tsutomu**
**7-C-11, Sanaicho**
**Joetsu-shi Niigata-ken(JP)**
Inventor: **Shimizu, Takaaki**
**3-19, Minamihoncho 3-chome**
**Joetsu-shi Niigata-ken(JP)**

(74) Representative: **Perry, Robert Edward et al**
**GILL JENNINGS & EVERY 53-64 Chancery Lane**
**London WC2A 1HN(GB)**

## Description

BACKGROUND OF THE INVENTION

The present invention relates to a method for the preparation of a silica sol dispersed in an organic solvent or, more particularly, to a method for the preparation of a silica sol dispersed in an organic solvent from a silica sol dispersed in an aqueous medium.

Various methods have been proposed and practiced in the prior art for the preparation of a silica sol dispersed in an organic solvent from a silica sol dispersed in an aqueous medium. Most of the known methods described in prior art documents involve a step of distillation for the azeotropic removal of water together with a hydrophilic organic solvent. The hydrophilic organic solvent is selected preferably from those capable of giving an azeotropic mixture of a content of water as high as possible so that the solvent frequently used for the purpose has a boiling point higher than that of water. On the other hand, U.S. Patents No. 2,433,776, No. 2,433,777, No. 2,433,778, No. 2,433,779 and No. 2,433,780 teach the use of an organic solvent having a boiling point lower than that of water, such as n-propyl alcohol boiling at 97.1 °C, as a dispersing medium for a silica sol by azeotropically removing water from an aqueous silica sol. The use of n-propyl alcohol for such a purpose is practically not advantageous in respect of the efficiency because the azeotropic mixture of n-propyl alcohol and water contains only 28.3% by weight of water so that the water contained in an aqueous silica sol dispersion can be completely removed only by using an unduly large amount of the organic solvent relative to the amount of the starting aqueous silica sol dispersion.

In addition to the above mentioned problems, the azeotropic method has several serious disadvantages as a method for the industrial preparation of a silica sol dispersed in an organic solvent from an aqueous silica sol. For example, the azeotropic distillation naturally produces a large volume of the azeotropic mixture as a waste from which the organic solvent must be recovered and reused for economy by undertaking a very complicate process such as extraction distillation. In addition, the adsorbed water on the surface of the silica particles is almost completely removed and converted into free or unbound water by the azeotropic distillation so that the stability of the dispersed silica particles is sometimes greatly affected unless the process is performed with utmost care and under an exquisite process control. Moreover, the solvent replacement by azeotropic distillation must be preceded by a step of deionization of the aqueous silica sol dispersion in order to prevent agglomeration of the silica particles and gelation of the silica sol.

An aqueous silica sol dispersion can of course be freed from water by subjecting the dispersion to distillation with an organic solvent which forms no azeotropic mixture with water provided that the boiling point thereof is higher than that of water. For example, Canadian Patent No. 954,765 teaches a process using ethylene glycol monoethyl ether. This process of distillation must be performed rapidly under a reduced pressure at a decreased temperature and it is essential to conduct the process with utmost care. It is also very difficult to design a sufficiently large apparatus for such a process. Further, Akabayashi, et al. in Kogyo Kagaku Zasshi, volume 68 (3), page 11 (1965) teach a method for the preparation of a silica sol dispersed in methyl alcohol which is one of the other organic solvents forming no azeotropic mixture with water. This method is, however, quite inefficient as an industrial process because preparation of 2 liters of a silica sol dispersion in methyl alcohol requires 18 liters of methyl alcohol taking 15.5 hours.

Furthermore US-A-2 801 185 discloses a process of making a redispersible powder of silica whereby silica sol is hydrophobized by silylation or esterification of surface hydroxyl groups.

Japanese Patent Publication 42-14698 teaches a method for the preparation of an organic-dispersed silica sol by the solvent replacement method utilizing a molecular sieve. This method, however, has a serious problem that fine dusts of the molecular sieve unavoidably enter the silica sol more or less and must be removed by undertaking an additional treatment while the dusts of a molecular sieve can be as fine as not to be separated from the silica sol particles or even finer. In the method described in Japanese Patent Kokai 63-74911 using ammonia as a catalyst, the molecular sieve adsorbs not only water but also a large amount of ammonia to greatly decrease the capacity of the molecular sieve for the adsorption of water with a decrease in the efficiency of solvent replacement as a consequence.

When the content of silica in the starting aqueous silica sol dispersion is increased to exceed 50% by weight with an object to improve the efficiency or productivity of the manufacturing process in the azeotropic method, the silica particles may sometimes cause agglomeration and settling in the dispersion in the course of the azeotropic distillation to greatly decrease the yield of the desired products. The molecular sieve method is economically disadvantageous in respect of the low silica content of the silica sol dispersion obtained thereby as the product which is only a half to a third of that in the starting aqueous silica sol dispersion necessitating a subsequent treatment for concentration increase because the column packed with the molecular sieve is filled with the organic solvent before the start of the process.

## SUMMARY OF THE INVENTION

The present invention accordingly has an object to provide a novel and efficient method for the preparation of a silica sol dispersed in an organic solvent, in particular, having hydrophobicity from an aqueous silica sol dispersion without the problems and disadvantages in the above described prior art methods.

Thus, the method of the present invention for the preparation of a silica sol dispersed in an organic solvent which is hydrophobic or not freely miscible with water comprises the successive steps of:

(a) centrifuging an aqueous silica sol dispersion to precipitate the silica particles contained therein;

(b) discarding the aqueous supernatant to leave a first deposit of the silica particles;

(c) adding a hydrophilic organic solvent to the first deposit of the silica particles;

(d) dispersing the silica particles of the deposit in the hydrophilic organic solvent;

(e) admixing the silica sol dispersed in the hydrophilic organic solvent with an oleophilic treatment agent to render the surface of the silica particles oleophilic or hydrophobic;

(f) centrifuging the silica sol dispersion to precipitate the silica particles contained therein;

(g) discarding the supernatant of the hydrophilic organic solvent to leave a second deposit of the silica particles;

(h) adding a hydrophobic organic solvent to the second deposit of the silica particles; and

(i) dispersing the silica particles of the second deposit in the hydrophobic organic solvent.

In particular, the oleophilic treatment agent above mentioned is selected from the group consisting of organosilanes, organodisilazanes and organopolysiloxanes specified hereinbelow.

## DETAILED DESCRIPTION OF THE PREFERRED EMBODIMENTS

As is described above, a silica sol dispersion in a hydrophilic organic solvent, i.e. an organic solvent freely miscible with water, is first prepared by the steps (a) to (d) of the inventive method from an aqueous silica sol dispersion as a starting material.

Various kinds of known aqueous silica sol dispersions can be used as the starting material in step (a) of the inventive method without particular limitations. Examples of suitable aqueous silica sol dispersions include those prepared from a water glass and those prepared by the hydrolysis of an alkoxysilane compound. The silica particles contained in the silica sol dispersion should have a particle diameter not too small so as to be able to be settled in the dispersion by the centrifugal treatment in step (a). The efficiency of the centrifugal settling of the silica particles can be improved, if desired, by subjecting the silica sol to coagulation with addition of an alcohol and the like prior to centrifugation even when the silica particles are somewhat too fine to cause difficulty in settling. Needless to say, the efficiency of centrifugal settling largely depends on the centrifugal force applied to the dispersion so that it is important that the centrifugal force is not unduly small. When the centrifugal force is too large, however, a problem is caused that the silica particles agglomerate too tightly so that re-dispersion of the deposited silica particles in step (d) can be performed with some difficulties. The desirable centrifugal force to be applied to the aqueous silica sol dispersion can be estimated by utilizing the well known Stokes' equation which gives the settling velocity of a particle in a medium as a function of the densities of the particle and the medium, viscosity of the medium, diameter of the particle and gravity or centrifugal force acting thereon.

When the silica particles in the aqueous sol have been fully deposited in step (a), the supernatant is discarded in step (b) to leave a deposit of the silica particles. Any known method can be used for discarding the supernatant including decantation, siphoning and, in some cases, filtration. It is important that the surface of the silica particle deposit is never dried by an unduly long exposure to the atmosphere.

The silica particle deposit thus freed from the aqueous supernatant as completely as possible is then admixed in step (c) with a hydrophilic orgnic solvent which is not limited to those capable of forming an azeotropic mixture with water. Examples of suitable hydrophilic organic solvents include alcohols, e.g., methyl and ethyl alcohols, aldehydes, e.g., acetoaldehyde, ketones, e.g., acetone, esters, e.g., ethyl acetate, ethers, e.g., tetrahydrofuran, amines, e.g., ethyl amine, and carboxylic acids, e.g., acetic acid. The inventive method is particularly effective when the organic solvent which should be the dispersion medium of the silica sol particles has a boiling point lower than that of water.

The silica particle deposit is then re-dispersed in step (d) in the hydrophilic organic solvent. Any conventional method for agitation of a mixture can be used for the purpose but it is sometimes desirable to use a high-efficiency agitating machine such as a homogenizer.

When the above described steps (a) to (d) are undertaken appropriately, the dispersion medium of the silica particles is the hydrophilic organic solvent containing water in a concentration depending on various parameters such as the kind of the organic solvent, particle size of the silica particles, velocity of revolution for centrifugation and the like. In an example, the dispersion medium after the step (d) is a mixture of about 80% by weight of the hydrophilic oreganic solvent and about 20% by weight of water. Such a silica sol dispersion in a hydrous organic solvent of course can find applications in various fields. The water content of the dispersion medium can be further decreased by repeating the procedure comprising centrifugal settling of the silica particles, discarding the supernatant, addition of a fresh portion of the organic solvent and re-dispersion of the silica particles in the organic solvent. In an example, the above mentioned water content of about 20% by weight can be decreased to about 5% by weight, about 2% by weight, about 1% by weight and about 0.8% by weight by repeating the above mentioned steps twice, thrice, four times and five times, respectively. Namely, the dispersion medium can be freed from water by repeating the above described procedure four or five times to such an extent that almost no problems are caused in most of applications due to water contained in the dispersion.

When an organic-dispersed silica sol is desired of which the dispersion medium is a hydrophobic organic solvent, the dispersion medium in the organic-dispersed silica sol obtained in the above described manner must be replaced with the desired hydrophobic organic solvent. It should be noted that direct replacement of the hydrophilic organic solvent with a hydrophobic organic solvent, i.e. addition of a hydrophobic solvent to the silica particle deposit from an aqueous dispersion of the silica sol, may cause instantaneous agglomeration of the silica particles to form a coagulum which can no longer be dispersed in an organic solvent by undertaking any known means. The hydrophobic organic solvent here implied is exemplified by hydrocarbon solvents such as hexane, cyclohexane, toluene, xylene and the like though not limitative thereto depending on the intended application of the organic silica sol dispersion.

It is therefore essential that the surface of the silica particles dispersed in the hydrophilic organic solvent is rendered hydrophobic or oleophilic by a treatment with an oleophilic surface treatment agent. Namely, the silica sol particles in a hydrophilic organic solvent are treated with an oleophilic surface treatment agent and then settled, for example, by centrifugation to form a deposit of the silica particles. Several types of surface treatment agents can be used for the purpose including organosilanes, organodisilazanes and organopolysiloxanes represented by the general formulas $R^1_{4-a}SiX_a$, $(R^1_3Si)_2NH$ and $Y-(-SiR_2-O-)_n-SiR_2-Y$, respectively, in which $R^1$ is a hydrogen atom or a monovalent hydrocarbon group exemplified by straightly linear, branched chain or cyclic alkyl groups, e.g., methyl, ethyl, propyl and cyclohexyl groups, alkenyl groups, e.g., vinyl and allyl groups, and aryl groups, e.g., phenyl and tolyl groups, as well as those substituted groups obtained by replacing a part or all of the hydrogen atoms in the above named hydrocarbon groups with substituent atoms and/or groups such as halogen atoms, cyano groups, amino groups, epoxy groups, hydroxy groups, alkoxy groups, ester groups, silyl groups, ketone groups, phosphino groups, alkylthio groups and the like, X is a hydroxy group, alkoxy group or halogen atom, R is a hydrogen atom or a monovalent hydrocarbon group exemplified by straightly linear, branched chain or cyclic alkyl groups, e.g. methyl, ethyl, propyl and cyclohexyl groups and aryl groups, e.g., phenyl and tolyl groups, Y is a hydrogen atom, halogen atom or reactive group selected from the class consisting of alkenyl groups, e.g., vinyl and allyl groups, amino group, epoxy group, hydroxy group and alkoxy groups, the subscript a is 1, 2 or 3 and the subscript n is a positive integer not exceeding 100. These surface treatment agents can be used either singly or as a combination of two kinds or more according to need.

Particular examples of the surface treatment agents include chlorosilane compounds such as trimethyl chlorosilane and dimethyl vinyl chlorosilane, alkoxy silane compounds such as methyl trimethoxy silane and 3-glycidyloxypropyl trimethoxy silane, alkyl silanol compounds such as trimethyl silanol, organodisilazane compounds such as hexamethyl disilazane, low-molecular dimethylpolysiloxanes such as oligomers of dimethyl siloxane units and the like.

The amount of the above described surface treatment agent should be such that, assuming that the amount of the silicon atoms contained in the silica sol is x moles and that in the surface treatment agent is y moles, the ratio of y:x is in the range from 0.01 to 0.5 or, preferably, in the range from 0.05 to 0.2. When the amount of the surface treatment agent is too small to give a y:x ratio smaller than, for example, 0.01, the surface of the silica particles cannot be rendered fully oleophilic resulting in eventual agglomeration of the silica particles in the course of the replacement of the organic solvents. When the amount of the surface treatment agent is too large to give a y:x ratio larger than, for example, 0.5, on the other hand, an economical disadvantage is caused due to the futile consumption of the relatively expensive surface treatment agent as a result of the hydrolysis of the agent per se by the water remaining in the dispersion medium followed by the silanol condensation proceeding predominantly over the reaction with the silanolic hydroxy groups on the silica particles.

The surface treatment of the silica sol particles in the hydrophilic organic solvent as the dispersion medium can be performed by gradually adding the surface treatment agent dropwise to the silica sol dispersion at room temperature followed by agitation of the mixture for 3 to 5 hours. When the silica sol particles have a relatively large diameter and the hydrophilic organic solvent is highly hydrophilic as methyl alcohol and acetone, the reaction between the surface treatment agent and the surface of the silica particles can be accelerated by heating the mixture under reflux of the solvent so that the reaction is complete within 30 minutes to 1 hour without the danger that the silica sol particles dispersed in such a solvent cause agglomeration.

When the above described oleophilic treatment of the silica particles in the hydrophilic organic solvent is completed, the silica sol dispersion is subjected to centrifugation to settle the silica particles therein to form a deposit which is then freed from the supernatant. In the next place, the deposit of the surface-treated silica sol particles is redispersed in the desired hydrophobic organic solvent. The volume of the hydrophobic organic solvent naturally depends on the deisred silica concentration in the final silica sol dispersion in the hydrophobic organic solvent. It is easy according to the above described procedure to obtain a silica sol dispersion in a hydrophobic organic solvent containing 50% by weight or more of silica particles.

As is understood from the above given description, the advantages obtained by the inventive method for the preparation of a silica sol in an organic solvent include: (1) the relatively small amount of the organic solvent to be used; (2) rapidness of the procedure for the solvent replacement; (3) simplicity in the procedure and the apparatus used in the process; (4) possibility of using an organic solvent which does not form an azeotropic mixture with water; (5) high efficiency of the process even when the organic solvent has a boiling point lower than that of water; and (6) possibility of preparing a silica sol dispersion of high silica concentration of, for example, 50% by weight or higher.

In contrast to the inventive method, the major current of the conventional methods for the preparation of silica sol dispersions in an organic solvent utilizes the principle of azeotropic distillatoion. Such an azeotropic process requires a large amount of organic solvents and takes a long time for complete solvent replacement. In addition, the process must be accompanied by some facilities for the disposal of the large volume of the waste liquid produced in the azeotropic distillation, from which the organic solvent must be recovered and recycled to cause great complicacy of the process as a whole. In the inventive method, silica particles and water as the dispersion medium in the starting aqueous silica sol dispersion are separated by centrifugation and the content of water in the silica particle deposit can be reduced to about 20 to 25% by a single centrifugal treatment. The water content in the silica particle deposit can be further decreased by repeating the procedure of centrifugation and discarding of the supernatant. Moreover, the deionization treatment of alkali ions from the starting aqueous silica sol dispersion, which is indispensable in the conventional methods, can be omitted because the alkali ions can be removed together with the aqueous supernatant discarded following the centrifugation. It is of course that the length of time taken for a single centrifugation treatment can be controlled as desired by adjusting the velocity of the centrifugal revolution. The centrifugal separator and the stirrer equipment for the redispersion of the silica particle deposit used in the inventive method can be any of conventional types. Recovery of the organic solvent from the waste liquid, i.e. mixture with water, can be performed by distillation without particular problems and costs when the organic solvent does not form an azeotropic mixture with water. In particular, it is a great advantage of the inventive method that a silica sol dispersion in a low-boiling organic solvent, which cannot be obtained by conventional methods, can be readily prepared. Moreover, the organic solvent used in the inventive method as a dispersion medium of silica sol particles can be water-immiscible and stable silica sol dispersion in such an organic solvent can be easily prepared by undertaking the step of surface treatment. In short, the inventive method is advantageous over conventional methods in respect of the versatility in the types of the organic solvent as the dispersion medium which is freed from the limitations that the solvent must be azeotropic with water, the solvent preferably has a boiling point higher than that of water and the solvent must be hydrophilic or water-miscible.

In the following, the method of the present invention is described in more detail by way of examples.

Example 1.

A centrifugation treatment was undertaken of 500 g of an aqueous silica sol dispersion prepared by the hydrolysis of tetramethoxy silane and containing 20% by weight of silica sol particles having an average particle diameter of 200 nm at a velocity of 3000 rpm for 10 minutes so that the silica particles were deposited. The thus obtained silica particle deposit was freed from the medium by discarding 350 g of the aqueous supernatant by decantation. Thereafter, 350 g of anhydrous acetone were added to the silica particle deposit which was re-dispersed in the medium of acetone using a homogenizer to form a silica sol dispersion in hydrous acetone. The dispersion is again centrifuged under the same conditions as above to give a second deposit of the silica particles which was freed from the supernatant of the hydrous acetone by decantation. The second silica particle deposit was again dispersed in a fresh portion of anhydrous acetone added in an amount to make up an overall amount of the mixture of 500 g and the silica particles were re-dispersed therein.

By four times repetition of the above described process of centrifugal settling of the silica particles, discarding of the supernatant and re-dispersion of the deposited silica particles, 500 g of a silica sol dispersion in acetone were obtained of which the content of silica was 19.5% by weight and the content of water in the dispersion was 0.9% by weight. Incidentally, the contents of water in the dispersion after the first, second and third times of re-dispersion were 20.1%, 5.3% and 2.2%, respectively. The silica particles in the thus obtained final dispersion had a particle diameter which was substantially identical with that in the starting aque-ous silica sol dispersion.

Example 2.

A centrifugation treatment was undertaken of 500 g of an aqueous silica sol dispersion prepared by the hydrolysis of tetramethoxy silane and containing 20% by weight of silica sol particles having an average particle diameter of 50 nm at a velocity of 3000 rpm for 30 minutes so that the silica particles were deposited. The thus obtained silica particle deposit was freed from the medium by discarding 350 g of the aqueous supernatant by decantation. Thereafter, 350 g of anhydrous acetone were added to the silica particle deposit which was re-dispersed in the medium of acetone using a homogenizer to form a silica sol dispersion in hydrous acetone. The dispersion is again centrifuged under the same conditions as above to give a second deposit of the silica particles which was freed from the supernatant of the hydrous acetone by decantation. The second silica particle deposit was again dispersed in a fresh portion of anhydrous acetone added in an amount to make up an overall amount of the mixture of 500 g and the silica particles were re-dispersed therein.

By six times repetition of the above described process of centrifugal settling of the silica particles, discarding of the supernatant and re-dispersion of the deposited silica particles, 500 g of a silica sol dispersion in acetone were obtained of which the content of silica was 17.3% by weight and the content of water was 1.2% by weight. The silica particles in the thus obtained final dispersion had a particle diameter which was substantially identical with that in the starting aqueous silica sol dispersion.

Example 3.

Into 500 g of the silica sol dispersion in acetone obtained in the preceding Example and containing 17.3% by weight of silica were added 10 g of hexamethyl disilazane (y:x = 0.043) dropwise over a period of 30 minutes and the dispersion was agitated at room temperature for 5 hours. The silica sol dispersion in acetone was then centrifuged to precipitate the silica particles to form a deposit which was freed from the medium by discarding 350 g of the supernatant by decantation. Thereafter, 350 g of toluene were added to the silica particle deposit which was re-dispersed in the solvent by using a homogenizer. By six times repetition of the above described procedure for the replacement of the solvent as the dispersion medium of the silica sol particles with a fresh portion of toluene, 500 g of a silica sol dispersed in toluene were obtained which contained 16.5% by weight of silica particles. Substantially no change was noted in the diameter of the silica particles due to the above described procedure of solvent replacement.

Example 4.

The same procedure as in Example 3 was repeated to give 500 g of a silica sol dispersion in toluene except that 10 g of hexamethyl disilazane were replaced with the same amount of trimethyl chlorosilane to give a value y:x of 0.064. The silica sol dispersion contained 16.9% by weight of silica particles which had a particle diameter substantially equal to that before the solvenr replacement.

Example 5.

The same procedure as in Example 3 was repeated to give 500 g of a silica sol dispersion in toluene except that 10 g of hexamethyl disilazane were replaced with 15 g of $\alpha,\omega$-dichloro eicosamethyl decasiloxane to give a value y:x of 0.013. The silica sol dispersion contained 16.1% by weight of silica particles which had a particle diameter substantially equal to that before the solvenr replacement.

Comparative Example 1.

An attempt was made to replace water as the dispersion medium of 500 g of an aqueous silica sol dispersion containing 20% by weight of silica particles having an average particle diameter of 50 nm obtained by the hydrolysis of tetramethoxy silane with acetone according to the procedure described in Japanese Patent Publication 42-14698 by using molecular sieve 4A. The thus obtained 500 g of the silica sol dispersion in acetone contained 19.8% by weight of silica and 1.2% by weight of water. The dispersion was colored in light yellow indicating intermixing of fine particles of the molecular sieve which could hardly be removed by filtration.

Comparative Example 2.

A 500 g portion of a commercial aqueous silica sol product containing 40% by weight of silica (tradename Snowtex 40, a product by Nissan Chemical Co.) was subjected to a deionization treatment by using a cation-exchange resin in the $H^+$-form according to the procedure described in U.S. Patent No. 2,577,485. An attempt was undertaken to replace the dispersion medium of water in the thus deionized aqueous silica sol dispersion with n-butyl alcohol by azeotropic distillation. The azeotropic distillation could be continued only to such an extent that the silica content in the dispersion did not exceed 45% by weight because further increase in the silica content was possible only by being accompanied by agglomeration and precipitation of a considerably large amount of the silica particles. After removal of the coarse particles and agglomerated particles, the yield of silica in the thus obtained uniform silica sol dispersion in n-butyl alcohol was only 63% of the silica content in the starting aqueous silica sol dispersion.

Example 6.

A centrifugation treatment was undertaken of 500 g of a commercial aqueous silica sol product containing 40% by weight of silica particles having a particle diameter of 90 nm (tradename Snowtex ZL, a product by Nissan Chemical Co.) at a velocity of 10,000 rpm for 30 minutes to precipitate the silica particles. The silica particle deposit was freed from the aqueous medium by discarding 250 g of the supernatant by decantation. Thereafter, 250 g of fresh anhydrous acetone were added to the silica particle deposit which was re-dispersed in the medium of acetone using a homogenizer to form a silica sol dispersion in hydrous acetone. The dispersion is again centrifuged under the same conditions as above to give a second deposit of the silica particles which was freed from the supernatant of the hydrous acetone by decantation. The second silica particle deposit was again dispersed in a fresh portion of anhydrous acetone added in an amount to make up an overall amount of the mixture of 500 g and the silica particles were re-dispersed therein.

By six times repetition of the above described procedure of centrifugal settling of the silica particles, discarding of the supernatant and re-dispersion of the deposited silica particles, 500 g of a silica sol dispersion in acetone were obtained of which the content of silica was 37.2% by weight and the content of water was 1.3% by weight. The silica particles in the thus obtained final dispersion had a particle diameter which was substantially identical with that in the starting aqueous silica sol dispersion.

Example 7.

The procedure was substantially the same as in Example 2 except that the silica particle deposit obtained in the sixth centrifugation treatment was dispersed in 30 g of fresh anhydrous acetone instead of 350 g to obtain 180 g of a high-concentration silica sol dispersion which contained 53% by weight of silica and 1.4% by weight of water. The silica particles in the thus obtained final dispersion had a particle diameter which was substantially identical with that in the starting aqueous silica sol dispersion.

**Claims**

1.   A method for the preparation of silica sol particles dispersed in a hydrophobic organic solvent which comprises the successive steps of:
    (a) centrifuging an aqueous silica sol dispersion to precipitate the silica particles contained therein;
    (b) discarding the aqueous supernatant to leave a first deposit of the silica particles;
    (c) adding a hydrophilic organic solvent to the first deposit of the silica particles;
    (d) dispersing the silica particles of the deposit in the hydrophilic organic solvent;
    (e) admixing the silica sol particles dispersed in the hydrophilic organic solvent with an oleophilic treatment agent to render the surface of the silica particles oleophilic;
    (f) centrifuging the silica sol to precipitate the silica particles contained therein;
    (g) discarding the supernatant of the hydrophilic organic solvent to leave a second deposit of the silica particles;
    (h) adding a hydrophobic organic solvent to the second deposit of the silica particles;

and

(i) dispersing the silica particles of the second deposit in the hydrophobic organic solvent.

2. The method for the preparation of a silica sol dispersed in a hydrophobic organic solvent as claimed in claim 1, wherein the oleophilic treatment agent is selected from the group consisting of organosilanes, organodisilazanes and organopolysiloxanes represented by the general formulas $R^1_{4-a}SiX_a$, $(R^1_3Si)_2NH$ and $Y-(-SiR_2-O-)_n-SiY_2-Y$, respectively, in which $R^1$ is a hydrogen atom or a substituted or unsubstituted monovalent hydrocarbon group, X is a hydroxy group, alkoxy group or halogen atom, Y is a hydrogen atom, a halogen atom or a reactive group selected from alkenyl (preferably vinyl and allyl) amino, epoxy, hydroxy and alkoxy groups, R is a hydrogen atom or a substituted or unsubstituted monovalent hydrocarbon group, the subscript a is 1,2 or 3 and the subscript n is a positive integer not exceeding 100.

3. The method for the preparation of a silica sol dispersed in a hydrophobic organic solvent as claimed in claim 2, wherein the oleophilic treatment agent is added in such an amount that the ratio of the number of the silicon atoms in the oleophilic treatment agent to that of the silica particles is in the range from 0.01 to 0.5.

**Revendications**

1. Une méthode de préparation des particules de sol de silice dispersées dans un solvant organique hydrophobe qui comprend les étapes successives suivantes :

(a) centrifugation d'une dispersion aqueuse de sol de silice pour précipiter les particules de silice contenues dans cette dispersion ;

(b) rejet du liquide aqueux surnageant pour laisser un premier dépôt de particules de silice ;

(c) addition d'un solvant organique hydrophile au premier dépôt de particules de silice ;

(d) dispersion des particules de silice de ce dépôt dans le solvant organique hydrophile ;

(e) mélangeage des particules de sol de silice dispersées dans le solvant organique hydrophile avec un agent de traitement oléophile pour rendre la surface des particules de silice oléophile ;

(f) centrifugation du sol de silice pour précipiter les particules de silice contenues dans ce sol ;

(g) rejet du liquide surnageant de solvant inorganique hydrophile pour laisser un second dépôt de particules de silice ;

(h) addition d'un solvant organique hydrophobe au second dépôt de particules de silice ; et

(i) dispersion des particules de silice du second dépôt dans le solvant organique hydrophobe.

2. La méthode de préparation d'un sol de silice dispersé dans un solvant organique hydrophobe selon la revendication 1, selon laquelle l'agent de traitement oléophile est choisi dans le groupe comprenant les organosilanes, les organodisilazanes et les organopolyxiloxanes représentés par les formules générales $R^1_{4-a}SiX_a$, $(R^1_3Si)_2NH$ et $Y-(-SiR_2-O-)_n-SiR_2-Y$, respectivement, dans lesquelles $R^1$ est un atome d'hydrogène ou un groupe hydrocarboné monovalent substitué ou non substitué, X est un groupe hydroxy, un groupe alcoxy ou un atome d'halogène, Y est un atome d'hydrogène, un atome d'halogène ou un groupe réactif choisi parmi les groupes alcényle (de préférence vinyle et allyle), amino, époxy, hydroxy et alcoxy, R est un atome d'hydrogène ou un groupe hydrocarboné monovalent ou un groupe hydrocarboné monovalent substitué ou non substitué, l'indidce a est égal à 1, 2 ou 3 et l'indice n est un nombre entier positif ne dépassant pas 100.

3. La méthode de préparation d'un sol de silice dispersé dans un solvant organique hydrophobe selon la revendication 2, selon laqelle l'agent de traitement oléophile est ajouté en quantité telle que le rapport entre le nombre d'atomes de silicium dans l'agent de traitement oléophile et celui des particules de silice soit dans l'intervalle de 0,01 à 0,5.

**Patentansprüche**

1. Verfahren zur Herstellung von in einem hydrophoben Organischen Lösungsmittel dispergierten Kieselsäuresol-Teilchen (bzw. aus Siliziumdioxid), das die folgenden hintereinanderfolgenden Schritte umfaßt:

a) Zentrifugieren einer wäßrigen Kieselsäuresol-Dispersion zum Ausfällen der darin enthaltenen Kieselsäureteilchen;

b) Verwerfen des wässrigen Überstands unter Erhalt eines ersten Niederschlags der Kieselsäureteilchen

c) Hinzufügen eines hydrophilen organischen Lösungsmittels zum ersten Niederschlag der Kieselsäureteilchen;

d) Dispergieren der Kieselsäureteilchen des Niederschlags in dem hydrophilen organischen Lösungsmittel;

e) Hinzumischen eines oleophilen Behandlungsmittels zu den in dem hydrophilen Organischen Lösungsmittel dispergierten Kieselsäuresol-Teilchen, um die Oberfläche der Kieselsäure teilchen oleophil zu machen;

f) Zentrifugieren des Kieselsäuresols zur Ausfällung der darin enthaltenen Kieselsäureteilchen;

g) Verwerfen des Überstands des hydrophilen, organischen Lösungsmittels unter Erhalt eines zweiten Niederschlags der Kieselsäureteilchen;

h) Zufügen eines hydrophoben Organischen Lösungsmittels zu dem zweiten Niederschlag der Kieselsäureteilchen; und

i) Dispergieren der Kieselsäureteilchen des zweiten Niederschlags in dem hydrophoben Organischen Lösungsmittel,

2. Verfahren zur Herstellung von in einem hydrophoben organischen Lösungsmittel dispergierten Kieselsäuresols (bzw. aus Siliziumdioxid) nach Anspruch 1, worin das oleophile Behandlungsmittel ausgewählt wurde aus der Gruppe: Organosilane, Organodisilazane und Organopolysiloxane der allgemeinen Formeln:

$R^1_{4-a}SiX_a, (R^1_3Si)_2NH$ bzw. $Y-(-SiR_2-O-)_n-SiR_2-Y$,

worin

R¹ ein Wasserstoffatom oder eine substituierte oder nicht substituierte einwertige Kohlenwasserstoffgruppe,

X eine Hydroxy-Gruppe, Alkoxy-Gruppe oder ein Halogenatom,

Y ein Wasserstoffatom, ein Halogenatom oder eine reaktive Gruppe ausgewählt aus Alkenyl- (vorzugsweise Vinyl- und Allyl-), Amino-, Epoxy-, Hydroxy- und Alkoxy-Gruppen,

R ein Wasserstoffatom oder eine substituierte oder nicht substituierte einwertige Kohlenwasserstoffgruppe,

a = 1, 2 oder 3 und

n = eine positive ganze Zahl unter 100 bedeuten.

3. Verfahren zur Herstellung von in einem hydrophoben organischen Lösungsmittel dispergierten Kieselsäuresols (bzw. aus Siliziumdioxid) nach Anspruch 2, worin das oleophile Behandlungsmittel in einer solchen Menge zugefügt wird, daß das Verhältnis der Anzahl der Siliziumatome in dem oleophilen Behandlungsmittel zu derjenigen der Kieselsäureteilchen zwischen 0,01 und 0,5 beträgt.